(19) Europäisches Patentamt
European Patent Office
Office européen des brevets

(11) Veröffentlichungsnummer: **0 166 462**
**A1**

(12) # EUROPÄISCHE PATENTANMELDUNG

(21) Anmeldenummer: **85109289.0**

(22) Anmeldetag: **05.09.83**

(51) Int. Cl.⁴: **A 01 N 43/653**, A 01 N 47/04
//
(A01N43/653, 41:12),(A01N47/04, 43:653)

(30) Priorität: **18.09.82 DE 3234624**

(43) Veröffentlichungstag der Anmeldung: **02.01.86**
**Patentblatt 86/1**

(84) Benannte Vertragsstaaten: **AT BE CH DE FR GB IT LI NL SE**

(60) Veröffentlichungsnummer der früheren Anmeldung nach Art. 76 EPÜ: **0106106**

(71) Anmelder: **BAYER AG, Konzernverwaltung RP Patentabteilung, D-5090 Leverkusen 1 Bayerwerk (DE)**

(72) Erfinder: **Brandes, Wilhelm, Dr., Eichendorffstrasse 3, D-5653 Leichlingen (DE)**
Erfinder: **Kaspers, Helmut, Dr., Steglitzer Strasse 4, D-5090 Leverkusen (DE)**
Erfinder: **Reinecke, Paul, Dr., Steinstrasse 8, D-5090 Leverkusen 3 (DE)**
Erfinder: **Scheinpflug, Hans, Dr., Am Thelenhof 15, D-5090 Leverkusen (DE)**
Erfinder: **Krämer, Wolfgang, Dr., Am Eckbusch 39/45, D-5600 Wuppertal 1 (DE)**

(54) **Fungizide Mittel.**

(57) Neue fungizide Wirkstoffkombinationen aus speziellen bekannten 1,2,4-Triazolyl-alkanolen der Formel

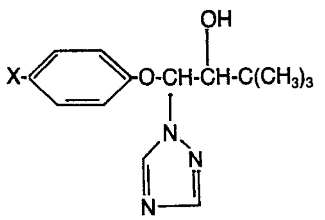

(I)

in welcher
X für Chlor oder Phenyl steht, und
(A) Polyhalogenalkylthio-Derivaten der allgemeinen Formel

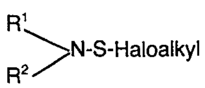

in welcher
$R^1$, $R^2$ und Halogenalkyl die in der Beschreibung angegebene Bedeutung besitzen.

EP 0 166 462 A1

0166462

2.Teilanmeldung zu der Europäischen Patentanmeldung
Nr. 83 108 719.2-2107

BAYER AKTIENGESELLSCHAFT 5090 Leverkusen, Bayerwerk
Konzernverwaltung RP
Patentabteilung Dü/Kü-c
III

## Fungizide Mittel

Die vorliegende Erfindung betrifft neue fungizide Wirkstoffkombinationen aus speziellen bekannten 1,2,4-Triazolyl-alkanolen und anderen bekannten fungiziden Wirkstoffen.

Es ist bereits allgemein bekannt, daß Mischungen enthaltend 1,2,4-Triazol-Derivate, wie z.B. das 1-(4-Chlorphenoxy)-3,3-dimethyl-1-(1,2,4-triazol-1-yl)-2-butanon, in Kombination mit anderen bekannten Fungiziden eine beachtlich höhere Wirkung als die Einzelkomponenten aufweisen (vgl. z.B. die Deutsche Offenlegungsschrift 25 52 967). Die Wirksamkeit dieser Wirkstoffmischungen ist jedoch nicht auf allen Anwendungsgebieten voll befriedigend.

Es wurde nun gefunden, daß neue Wirkstoffkombinationen aus speziellen 1,2,4-Triazolyl-alkanolen der Formel

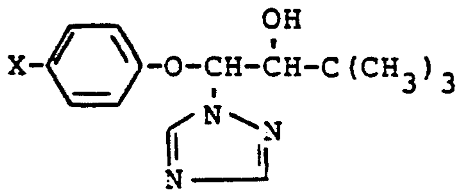 (I)

in welcher

X für Chlor oder für Phenyl steht,

und

(A) Polyhalogenalkylthio-Derivaten der allgemeinen Formel

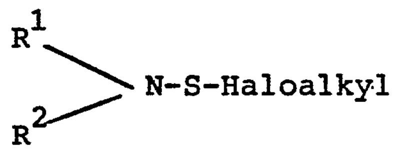 (II)

in welcher

$R^1$ für Amidosulfonyl und Dimethylaminosulfonyl steht,

$R^2$ für Phenyl, Methylphenyl und Halogenphenyl steht, und außerdem

$R^1$ und $R^2$ gemeinsam für die Reste

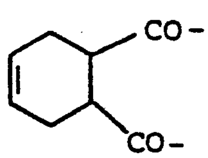 und 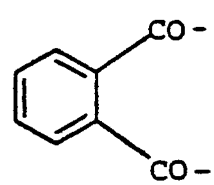

stehen können, und

"Haloalkyl" für mit 2 bis 5 Halogenatomen substituiertes Alkyl mit bis zu 2 Kohlenstoffatomen steht, eine besonders hohe fungizide Wirksamkeit aufweisen.

Überraschenderweise ist die fungizide Wirkung der erfindungsgemäßen Wirkstoffkombinationen wesentlich höher als die Wirkung der Einzelkomponenten und gegebenenfalls auch als die Summe der Einzelkomponenten (synergistischer Effekt). Die Auffindung dieser Kombinationen aus speziellen 1,2,4-Triazolyl-alkanolen der Formel (I) und den Wirkstoffen der oben angegebenen Gruppe (A) stellt eine wertvolle Bereicherung der Technik dar.

Die für die erfindungsgemäße Kombination speziell zu verwendenden 1,2,4-Triazolyl-alkanole sind durch die obige Formel (I) eindeutig definiert; unter diese Formel fallen die beiden Verbindungen

(Ia): X=Cl; Kurzbezeichnung TRIADIMENOL

(Ib): X= 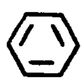 ; Kurzbezeichnung BITERTANOL.

Die genannten Verbindungen sind allgemein bekannt (vgl. hierzu die Deutschen Patentschriften 22 01 063 und 23 24 010 bzw. die entsprechenden US-Patentschriften 3 912 752 und 3 952 002).

Die als Mischungskomponenten zu verwendenden Polyhalogenalkylthio-Derivate (Gruppe A) sind durch die Formel (II) definiert. Bevorzugt zu nennen sind hier die folgenden Verbindungen:

(IIa): $R^1=(CH3)_2N-SO_2$, $R^2$ = 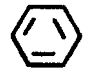 -, Halogenalkyl = $CCl_2F$
(Kurzbezeichnung DICHLOFLUANID)

(IIb): R1 + $R^2$ = 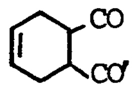 Haloalkyl = $CCl_3$
(Kurzbezeichnung CAPTAN)

(IIc): R1+$R^2$ = 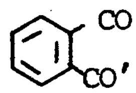, Haloalkyl = $CCl_3$
(Kurzbezeichnung FOLPET)

(IId): R1+$R^2$ = 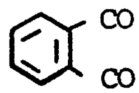, Haloalkyl = $CCl_2$-$CHCl_2$
(Kurzbezeichnung CAPTAFOL)

Die Verbindungen sind ebenfalls schon seit längerer Zeit allgemein bekannt (vgl. z.B. R. Wegler, loc. cit., Seiten 95, 108, 109 und 110).

Zu einer Wirkstoffkombination aus den 1,2,4-Triazolyl-alkanolen der Formel (I) und den Wirkstoffen aus den Gruppen (A) können noch weitere Wirkstoffe (z.B. als Drittkomponente) hinzukommen.

Die Gewichtsverhältnisse der Wirkstoffgruppen in den Wirkstoffkombinationen können in relativ großen Bereichen schwanken. Im allgemeinen entfallen auf 1 Gew.-Teil an 1,2,4-Triazol-alkanol der Formel (I) 0,1 bis 500 Gew.-Teile Wirkstoff aus der Wirkstoffklasse (A) vorzugsweise 0,2 bis 200 Gew.-Teile aus der letzteren, besonders bevorzugt 0,5 bis 50 Gew.-Teile.

Die erfindungsgemäßen Wirkstoffkombinationen weisen eine starke mikrobizide Wirkung auf und können zur

Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwenigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besonders praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia- Urocystis-, Ustilago-, Septoria-, Typhula-, Rhynchosporium-, Helminthosporium- und Fusarium-Arten hervorgerufen werden. Durch die systemische Wirkung des einen Mischungspartners werden die Pflanzen auch oft längere Zeit nach der Beizung noch vor Krankheitserregern geschützt, die

verschiedene Teile des Sprosses angreifen können, z.B. echte Mehltaupilze und Rostpilze. Die Wirkstoffkombinationen können daneben auch als Bodenbehandlungsmittel gegen phytopathogene Pilze eingesetzt werden und wirken gegen Wurzelfäulen und Tracheomykosen, die z.B. durch Krankheitserreger der Gattungen Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae, Pellicularia sasakii.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat. Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate

angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behändlung des Bodens sind Wirkstoffkonzentrationen von 0,00001 bis 0,1 Gew.-%, vorzugsweise von 0,0001 bis 0,02 %, am Wirkungsort erforderlich.

Zur Erläuterung dienen die nachfolgenden Anwendungsbeispiele. Beispielhaft in erfindungsgemäßen Wirkstoffkombinationen zu verwendende Wirkstoffe sind in der nachfolgenden Aufstellung aufgelistet:

| Wirkstoff Nr. | Formel | Bezeichnung | Literatur |
|---|---|---|---|
| 1 | Ia | TRIADIMENOL | DE-OS 23 24 010<br>US-PS 3 952 002 |
| 2 | Ib | BITERTANOL | wie bei Verbindung 1<br>cit., S. 95 |
| 3 | IIa | DICHLOFULANID | Wegler, loc. cit., S. 95 |
| 4 | IIb | CAPTAN | Wegler, loc. cit. S. 108 |
| 5 | IIc | FOLPET | Wegler, loc. cit., S. 109 |
| 6 | IId | CAPTAFOL | Wegler, loc. cit., S. 110 |

0166462

Beispiel A

Venturia-Test (Apfel) / protektiv

Lösungsmittel: 4,7 Gewichtsteile Aceton
Emulgator: 0,3 Gewichtsteile Alkyl-aryl-polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20°C und 100 % relativer Luftfeuchtigkeit in einer Inkubationskabine.

Die Pflanzen werden dann im Gewächshaus bei 20°C und einer relativen Luftfeuchtigkeit von ca. 70 % aufgestellt.

12 Tage nach der Inokulation erfolgt erfolgt die Auswertung.

Die erfindungsgemäßen Wirkstoffkombinationen zeigen in diesem Test eine sehr gute Wirkung.

Beispiel B

Venturia-Test (Apfel) / kurativ

Lösungsmittel: 4,7 Gewichtsteile Aceton
Emulgator: 0,3 Gewichtsteile Alkyl-aryl-polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer wäßrigen Konidiensuspension des Apfelschorferregers (Venturia inaequalis) inokuliert. Die Pflanzen verbleiben 1 Tag bei 20°C und 100 % relativer Luftfeuchtigkeit in einer Inkubationskabine und werden dann im Gewächshaus aufgestellt. Nach einer angegebenen Stundenzahl werden die Pflanzen mit der Wirkstoffzubereitung tropfnaß gespritzt.

Die Pflanzen werden dann im Gewächshaus bei 20°C und einer relativen Luftfeuchtigkeit von ca. 70 % aufgestellt.

12 Tage nach der Inokulation erfolgt die Auswertung.

Die erfindungsgemäßen Wirkstoffkombinationen zeigen in diesem Test eine sehr gute Wirkung.

Beispiel C

Septoria nodorum-Test (Weizen) / Saatgutbehandlung

Die Anwendung der Wirkstoffe erfolgt als Trockenbeizmittel. Sie werden zubereitet durch Abstrecken des jeweiligen Wirkstoffes mit Gesteinsmehl zu einer feinpulverigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn in einem Gewächshaus bei einer Temperatur von ca. 15°C in Saatkästen, die täglich 15 Stunden dem Licht ausgesetzt werden.

Ca. 3 Wochen nach der Aussaat erfolgt die Auswertung der Pflanzen auf Symptome der Septoriose.

Die erfindungsgemäßen Wirkstoffkombinationen zeigen in diesem Test eine sehr gute Wirkung.

Beispiel D

Fusarium culmorum-Test (Weizen) / Saatgutbehandlung

Die Anwendung der Wirkstoffe erfolgt als Trockenbeizmittel. Sie werden zubereitet durch Abstrecken des jeweiligen Wirkstffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn im Gewächshaus bei einer Temperatur von ca. 18°C in Saatkästen, die täglich 15 Stunden dem Licht ausgesetzt werden.

Ca. 3 Wochen nach der Aussaat erfolgt die Auswertung der Pflanzen auf Symptome.

Die erfindungsgemäßen Wirkstoffkombinationen zeigen in diesem Test eine sehr gute Wirkung.

Patentansprüche

1. Fungizide Mittel, gekennzeichnet durch einen Gehalt an einer Wirkstoffkombination aus speziellen 1,2,4-Triazolyl-alkanolen der Formel

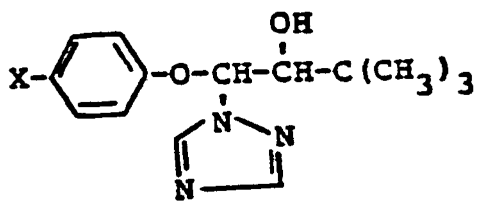

(I)

in welcher

X für Chlor oder für Phenyl steht,

und

(A) Polyhalogenalkylthio-Derivaten der allgemeinen Formel

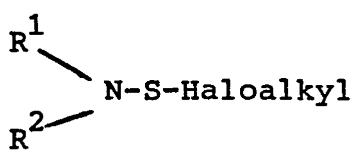

(II)

in welcher

$R^1$ für Amidosulfonyl und Dimethylamidosulfonyl steht,

$R^2$ für Phenyl, Methylphenyl und Halogenphenyl steht, und außerdem

$R^1$ und $R^2$ gemeinsam für die Reste

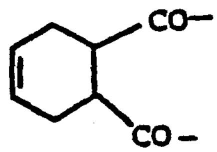

und

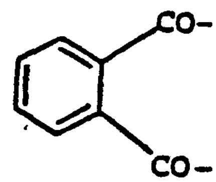

stehen können, und

"Haloalkyl" für mit 2 bis 5 Halogenatomen substituiertes Alkyl mit bis zu 2 Kohlenstoffatomen steht.

2. Fungizides Mittel, gekennzeichnet durch einen Gehalt an einer Wirkstoffkombination aus speziellen 1,2,4-Triazolyl-alkanolen der Formel (I) in Anspruch 1 und

(A) Polyhalogenalkylthio-Derivate der Formel (II) in Anspruch 1, wobei

$R^1$ für Dimethylamidosulfonyl steht,
$R^2$ für Phenyl steht und außerdem
$R^1$ und $R^2$ gemeinsam auch für die

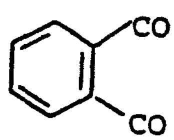

-Gruppe stehen können, und

"Haloalkyl" für die Gruppen $-CCl_3$, $-CCl_2F$ und $-CCl_2-CHCl_2$ steht.

3. Fungizide Mittel gemäß Anspruch 1 oder 2, dadurch gekennzeichnet, daß in der Wirkstoffkombination das Gewichtsverhältnis von 1,2,4-Triazolyl-alkanolen zu den Wirkstoffen aus der Wirkstoffklasse (A) zwischen 1:0,1 und 1:500 liegt.

4. Fungizide Mittel gemäß Ansprüchen 1 bis 3, dadurch gekennzeichnet, daß das Gewichtsverhältnis zwischen 1:0,2 und 1:200 liegt.

5. Fungizide Mittel gemäß Ansprüchen 1 bis 4, dadurch gekennzeichnet, daß das Gewichtsverhältnis zwischen 1:0,5 und 1:50 liegt.

6. Verfahren zur Bekämpfung von Pilzen, dadurch gekennzeichnet, daß man eine Wirkstoffkombination gemäß Anspruch 1 oder 2 auf Pilze oder deren Lebensraum einwirken läßt.

7. Verwendung von Wirkstoffkombinationen gemäß Anspruch 1 oder 2 zur Bekämpfung von Pilzen.

8. Verfahren zur Herstellung von fungiziden Mitteln, dadurch gekennzeichnet, daß man eine Wirkstoffkombination gemäß Anspruch 1 oder 2 mit Streckmitteln und/oder oberflächenaktiven Mitteln vermischt.

Europäisches Patentamt

# EUROPÄISCHER RECHERCHENBERICHT

0166462
Nummer der Anmeldung
EP 85 10 9289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 332 707 (BAYER) * Ansprüche * & DE - A - 2 552 967 (Kat. D)<br>----- | 1-8 | A 01 N 43/653<br>A 01 N 47/04 //<br>(A 01 N 43/653<br>A 01 N 41:12 )<br>(A 01 N 47/04<br>A 01 N 43:653) |

| RECHERCHIERTE SACHGEBIETE (Int. Cl.4) |
|---|
| A 01 N |

Der vorliegende Recherchenbericht wurde für alle Patentansprüche erstellt.

| Recherchenort | Abschlußdatum der Recherche | Prüfer |
|---|---|---|
| DEN HAAG | 20-09-1985 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82